# EUROPEAN PATENT APPLICATION

(11) **EP 4 198 065 A1**
(43) Date of publication of application: **21.06.2023**
(21) Application number: 21215494.2
(22) Date of filing: 17.12.2021
(51) Int. Cl.: C08F 222/10

(54) **DIACRYLATED MONOLIGNOL THERMOSET RESINS**

(71) Applicant: VITO NV, 2400 Mol (BE)
(72) Inventor: VENDAMME, Richard, 2400 Mol (BE); RUBENS, Maarten, 2400 Mol (BE)
(74) Representative: Arnold & Siedsma

(57) **Abstract**

In general the present invention relates to cross-linked-polymers (resins) from acrylated lignin oils, comprising di-acrylated dihydroconiferyl alcohol (DADCA). The present invention further provides methods for preparing such polymers, the building blocks and the use thereof in the manufacture of homo- and co-polymers comprising DADCA and DADCA-like molecules. In a further aspect, this invention elaborates on the possible applications of the polymers thus obtained.

## Description

### Field of the invention

In general the present invention relates to cross-linked-polymers (resins) from acrylated lignin oils, comprising di-acrylated dihydroconiferyl alcohol (DADCA).

The present invention further provides methods for preparing such polymers, the building blocks and the use thereof in the manufacture of homo- and co-polymers comprising DADCA and DADCA-like molecules. In a further aspect, this invention elaborates on the possible applications of the polymers thus obtained.

### Background

Due to eventually inevitable depletion of petroleum resources and environmental concerns in recent years the search for alternatives for petroleum-based products have increased significantly. Currently the most common synthetic polymers in use are polyolefins such as polypropylene or polyethylene, which come from natural gas, which is not a renewable resource and disposal of such materials presents an environmental issue since they are not easily degradable and burning releases CO₂ which upsets the natural atmospheric balance. An extremely attractive alternative to synthetic polymers from petrochemicals are materials that are inherently found and regenerated in the environment. Lignin being second most abundant biopolymer in environment seems like obvious choice as alternative for petrochemical products. One of the ways the lignin could be utilized is the depolymerization into smaller fragments, followed by separation of different molecular weight fractions and subsequent use of monomers to further functionalization and production of bioderived materials.

Biosynthetically lignin is produced mainly through three types of units (monolignols): p-coumaryl (H lignin), sinapyl (S lignin) and coniferyl (G lignin), abundance of which depends on the species - gymnosperms contain almost exclusively G units, angiosperms mixture of G and S units, while H units are more abundant in grasses and softwood compression wood. Consequentially, high temperature metal catalyzed hydrogenolysis produces reduced monolignols and dimeric and oligomeric structures (lignin oils). The main small molecular weight reduced monolignols commonly found in depolymerized lignins are: propylguaiacol (PG), propylsyringol (PS), dihydroconiferyl alcohol (DCA) and dihydrosinapyl alcohol (DSA). The ratio between G and S can be tuned by the choice of feedstock, while the ratio between alcohol and propyl derivatives by the choice of catalyst.

In a previous study, we report the synthesis of thermoplastic methacrylic polymers out of the above mentioned mono-methacrylated monolignols which can be obtained after depolymerization of lignin. In said earlier reported thermoplastic methacrylic polymers a large amount of phenolic constructions were retained. The presence of these groups has been considered to be important in entailing the radical scavenger activity of lignins (Dizhbite T, Telysheva G, Jurkjane V, Viesturs U. Characterization of the radical scavenging activity of lignins-natural antioxidants. Bioresource Technology. 2004;95(3):309-317).

It is an object of the present invention to make use these unexploited phenolic residues and provide thermosetting resins of di-acrylated lignin oils instead. Such crosslinked polymers are for example useful for instance in UV-curable coatings, adhesives, inks or 3D printing processes such as stereolithography.

### Summary of the invention

In a first aspect the present invention provides cross-linked di-acrylate (DA) polymers obtainable from lignin derived monolignols. Such DA polymers are characterized in comprising cross-linking units obtained from di-acrylated monolignols and generally represented by formula (I) below.

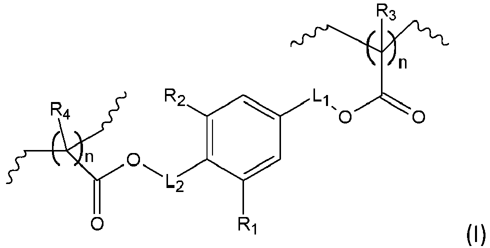

Wherein;
- R1 and R2 each independently represent hydrogen or oxy-C₁₋₄alkyl; in particular hydrogen or oxy-methyl;
- L₁ and L₂ each independently represents a direct bond, C₁₋₆ carbon chain, including a C₁₋₆alkyl or C₁₋₆alkenyl;
- R3 and R4 each independently represents hydrogen or C₁₋₆alkyl; and
- n represent an integer ≥ 2

Different di-acrylated monolignols can be used in the synthesis of the DA polymers by using a mixture of such different di-acrylated monolignols in the radical polymerization reaction further detailed hereinafter. When applying such a mixture of different di-acrylated monolignols in the radical polymerization reaction, this comes down to an independent election of the substituents within the cross-linking repeating units represented by formula (I) of the polymer. In another embodiment the cross-linking repeating units represented by formula (I) in the DA polymers are the same.

In a second aspect the present invention a polymer comprising cross-linkable moieties obtained from di-acrylated monolignols and generally represented by formula (II) below.

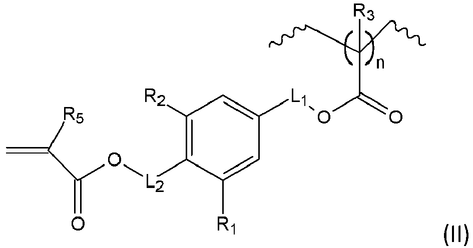

Wherein;
- R1 and R2 each independently represent hydrogen or oxy-C₁₋₄alkyl; in particular hydrogen or oxy-methyl;
- L₁ and L₂ each independently represents a direct bond, C₁₋₆ carbon chain, including a C₁₋₆alkyl or C₁₋₆alkenyl;
- R3 represents hydrogen or C₁₋₆alkyl;
- R5 represents hydrogen or C₁₋₆ alkyl; in particular hydrogen, or methyl; and
- n represent an integer ≥ 2

In a third aspect the present invention provides the polymerizable monomers for use in the synthesis of polymers comprising the cross-linking moieties or the cross-linkable moieties according to the respective formulas (I) and (II) above, said polymerizable monomers consisting of di-acrylated monolignols commonly found in depolymerized lignins, and selected from the group consisting of propylguaiacol (PG), propylsyringol (PS), dihydroconiferyl alcohol (DCA) and dihydrosinapyl alcohol (DSA).

In one embodiment said di-acrylated monolignols are generally represented by formula (III) below;

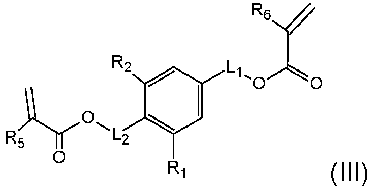

Wherein;
- R1 and R2 each independently represent hydrogen or oxy-C₁₋₄alkyl; in particular hydrogen or oxy-methyl;
- R5 and R6 each independently represent hydrogen or C₁₋₆ alkyl; in particular hydrogen or methyl; and
- L₁ and L₂ each independently represents a direct bond, C₁₋₆ carbon chain, including a C₁₋₆alkyl or C₁₋₆alkenyl.

In another embodiment the polymerizable monomers consist of the di-acrylated monolignols of formula (III) wherein;
- R1 and R2 each independently represent hydrogen or oxy-C₁₋₄alkyl; in particular hydrogen or oxy-methyl;
- R5 and R6 each independently represent hydrogen or C₁₋₆ alkyl; in particular hydrogen or methyl;
- L₁ represents a direct bond, C₁₋₆ carbon chain, including a C₁₋₆alkyl or C₁₋₆alkenyl;in particular a C₁₋₆ carbon chain, including a C₁₋₆alkyl or C₁₋₆alkenyl; and
- L₂ represents a direct bond.

In an even further embodiment the polymerizable monomers for use in the synthesis of polymers comprising the cross-linking moieties or the cross-linkable moieties according to the respective formulas (I) and (II) above, are selected from the group consisting of

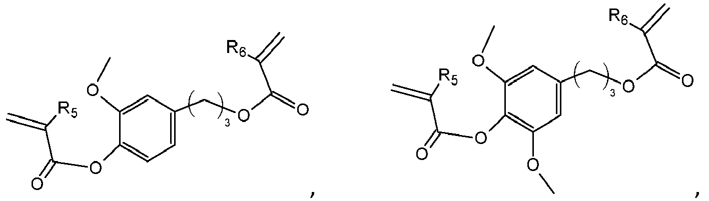

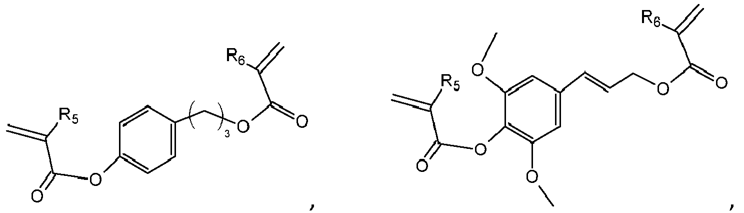

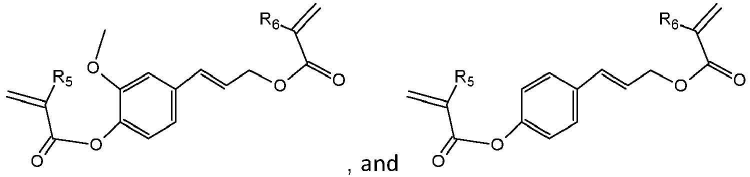

Wherein R₅ and R₆ each independently represent hydrogen or C₁₋₆alkyl; in particular hydrogen or methyl.

Besides DA polymers solely based on the aforementioned di-acrylated monolignols, within the context of the present invention also referred as homopolymers, the DA polymers according to the invention could also be based on the radical polymerization reaction of a mixture of lignin derived di-acrylated monolignols with other (meth)acrylic monomers, including mono-(meth)acrylated monolignols. In such, instance the DA polymers are characterized in comprising further repeating units obtained from such other (meth)acrylic monomers and generally represented by formula (IV) below.

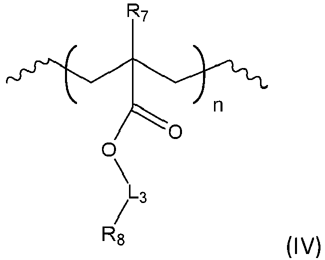

Wherein,
- L₁ represents a direct bond, C₁₋₆ carbon chain, including a C₁₋₆alkyl or C₁₋₆alkenyl;
- R₇ represents hydrogen or C₁₋₆alkyl;
- R₈ represents C₁₋₂₄alkyl; C₂₋₂₄alkenyl; or aryl wherein said aryl is optionally substituted with one or more substituents selected from the group consisting of -OH, and -oxy-C₁₋₆alkyl.

As for the repeating units obtained from the di-acrylated monolignols, also for the repeating units obtained from such other (meth)acrylic monomers, a mixture of different (meth)acrylic monomers can be used in the radical polymerization reaction. When applying such a mixture of different (meth)acrylic monomers in the radical polymerization reaction, this comes down to an independent election of the substituents within the repeating units represented by formula (IV) of the polymer. In another embodiment the repeating units represented by formula (IV) in the polymethacrylates are the same. Within the context of the present invention DA polymers comprising such further repeating units represented by formula (IV) are generally referred to as co-polymers irrespective of the fact whether said further repeating units represented by formula (IV) within the polymer are the same or different. In a particular embodiment such co-polymers are obtained from a mixture comprising at least 5 wt% of di-acrylated monolignols as herein defined. In the polymerization reaction, besides further (meth)acrylic monomers, also (meth)acrylic oligomers and even (meth)acrylic polymers can be used. In a particular embodiment, the DA polymers are the results of a polymerization reaction from a mixture comprising at least 5 wt% of di-acrylated monolignols as herein defined, with a composition comprising other lignin-derived monomers, such as acrylated lignin oligomers, acrylated polymeric lignin or other lignin derived monomers.

The composition comprising the lignin-derived monomers could for example be a depolymerized lignin oil comprising lignin-derived dimers, trimers and oligomers. In said instance, and for use in the synthesis of cross-linked acrylate polymers (resins) from acrylated lignin oils, comprising di-acrylated monolignols as herein defined, such oil comprises at least 5% by weight; more in particular at least 10% by weight of the di-acrylated monolignols as herein defined. Thus in another embodiment the present invention provides cross-linked acrylate polymers (resins), wherein said acrylates comprise the radical polymerization reaction product of an acrylated depolymerized lignin oil composition containing at least 10% by weight of di-acrylated monolignols according to Formulas (III).

Consequently, in a further embodiment the present invention provides copolymers comprising the combination of cross-linked or cross-linkable moieties obtained from di-acrylated monolignols and generally represented by formulas (I) and (II), with further (meth)acrylic derived repeating units represented by formula (IV) above.

In a fourth aspect the present invention provides a method for the synthesis of the above mentioned DA polymers. In one embodiment this method includes;
- an acrylation of the alcohols in the monolignols obtainable from lignin depolymerization, yielding the di-(meth)acrylated monolignols of formula (III) above; and
- a radical polymerization reaction of said di-(meth)acrylated monolignols of formula (III) to yield the polymers according to the invention.

The acrylation of the alcohols in the monolignols is typically performed employing acryloyl chlorides in the presence of stoichiometric amounts of amine bases such as triethylamine, 1 4-(dimethylamino)pyridine or 4-pyrrolidinopyridine2 and tributylphosphine3, in an anhydrous solvent and an inert atmosphere. Anhydrous organic solvents suitable for this purpose include, e.g. dimethylformamide (DMF), dimethylsulphoxide, ethylene carbonate and -butyrolactone. The reaction needs to be performed in an anhydrous environment with appropriate pre-treatment of the materials being used, and consequently under an inert, typically nitrogen, atmosphere. Typically to a reaction mixture of the monolignols with the amine base (the latter in slight stoichiometric excess) the acryloyl chlorides (also in slight stoichiometric excess) are added dropwise. The reaction is allowed to proceed till completion, and the reaction product separated by precipitating the crude mixture in water, yielding the di-(meth)acrylated monolignols as precipitate.

The radical polymerization reaction of the di-(meth)acrylated monolignols of formula (III) makes use of a radical initiator in an appropriate solvent. In one embodiment the radical initiator is an azo compound; in particular azo compounds selected from azobisisobutyronitrile (AIBN) or 1,1'-azobis(cyclohexanecarbonitrile) (ABCN). The appropriate solvent is chosen from dioxane, THF, methanol, ethanol, DMF and the like; in particular dioxane.

Thus in a particular embodiment the radical polymerization reaction is performed by dissolving the di-(meth)acrylated monolignol(s) of formula (III) in dioxane and initiating the reaction by adding a radical initiator; in particular by adding azobisisobutyronitrile (AIBN) or 1,1'-azobis(cyclohexanecarbonitrile) (ABCN). In one embodiment a mixture of di(meth)acrylated monolignol(s) of formula (III) is being dissolved in the appropriate solvent. In another embodiment a single di-(meth)acrylated monolignol of formula (III) is being dissolved in the appropriate solvent. As mentioned above, within the context of the present invention, DA polymers solely synthesized from di-(meth)acrylated monolignol(s) of formula (III) are referred to as homopolymers. As mentioned above, given the presence of the cross-linkable moieties these DA homopolymers provide thermoset resins useful for instance in UV-curable coatings, adhesives, inks or 3D printing processes such as stereolithography.

In another embodiment the radical polymerization reaction is performed on a mixture of the di(meth)acrylated monolignols of formula (III) with other acrylic monomers instead yielding the presence of further repeating units according to formula (IV) within the co-polymers thus obtained. The other acrylic monomers are preferably selected from mono-(meth)acrylated monolignols, methyl methacrylates, methyl acrylates, ethyl acrylates, ethyl methacrylate, 2-ethylhexyl acrylate, acrylates from other Guerbet alcohols, methacrylates from Guerbet alcohols, butyl acrylate, butyl methacrylate, propyl acrylate, propyl methacrylate, 3-phenyl-propylmethacrylate, citronellyl acrylate, geranyl acrylate, neryl acrylate, prenyl acrylate, citronellyl methacrylate, geranyl methacrylate, neryl methacrylate, prenyl methacrylate, other acrylates and methacrylates of terpene alcohols and the like. Adding other acrylic monomers to the mixture allows to modify the thermoplast and antioxidant and anti-inflammatory characteristics of the DA polymers thus obtained.

In another embodiment the radical polymerization reaction is performed on an acrylated lignin oil comprising the di(meth)acrylated monolignols of formula (III) with other lignin derived acrylic monomers, dimers, trimers and oligomers. Said composition being dissolved in an appropriate solvent and initiating the reaction by adding a radical initiator; in particular by adding azobisisobutyronitrile (AIBN) or 1,1'-azobis(cyclohexanecarbonitrile) (ABCN).

In one embodiment the mono-(meth)acrylated monolignols for use as further acrylic monomers in the synthesis of DA polymers according to the invention can generally be represented by formula (V)

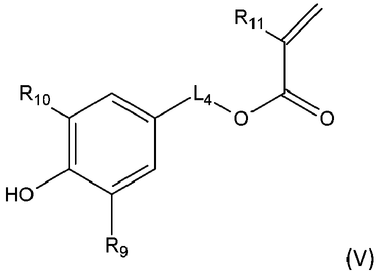

Wherein;
- R₉ and R₁₀ each independently represent hydrogen or oxy-C₁₋₄alkyl; in particular hydrogen or oxy-methyl;
- L₄ represents a direct bond, C₁₋₆ carbon chain, including a C₁₋₆alkyl or C₁₋₆alkenyl; and
- R₁₁ represents hydrogen or C₁₋₆alkyl;

### Detailed description of the invention

The present invention is directed to the use di-acrylated lignin derived monolignols in the synthesis of poly(meth)acrylates, herein also referred to as DA polymers.

To the best of our knowledge, polymers of di-(meth)acrylated monolignols, such as di-acrylated dihydroconiferyl alcohol (DADCA) have not been described before. The objective of the current patent application is to protect the product, i.e. homo- and copolymers of such monomers like dihydroconiferyl di-acrylates and derived polymers (e.g. where aromatic hydroxyl group is esterified).

Besides DCA (represented below), lignin oil is known to comprise further coniferyl alcohols. Some of them reproduced below, but a general overview of the alcohols that can be found in such oils can generally be represented according to formula (VI). 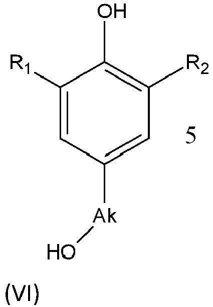 wherein;
R1 and R2 each independently represent hydrogen, or - oxy-C₁₋₄alkyl; in particular hydrogen, or -oxy-Methyl;
Ak represents a C₁₋₆ carbon chain, including a C₁₋₆alkyl or C₁₋₆alkenyl

The term "alkyl" by itself or as part of another substituent refers to a fully saturated hydrocarbon of Formula CxH2x+1 wherein x is a number greater than or equal to 1. Generally, alkyl groups of this invention comprise from 1 to 20 carbon atoms. Alkyl groups may be linear or branched and may be substituted as indicated herein. When a subscript is used herein following a carbon atom, the subscript refers to the number of carbon atoms that the named group may contain. Thus, for example, C₁₋₄alkyl means an alkyl of one to four carbon atoms. Examples of alkyl groups are methyl, ethyl, n-propyl, i-propyl, butyl, and its isomers (e.g. n-butyl, i-butyl and t-butyl); pentyl and its isomers, hexyl and its isomers, heptyl and its isomers, octyl and its isomers, nonyl and its isomers; decyl and its isomers. C₁₋₆alkyl includes all linear, branched, or cyclic alkyl groups with between 1 and 6 carbon atoms, and thus includes methyl, ethyl, n-propyl, i-propyl, butyl and its isomers (e.g. n-butyl, i-butyl and t-butyl); pentyl and its isomers, hexyl and its isomers, cyclopentyl, 2-, 3-, or 4-methylcyclopentyl, cyclopentylmethylene, and cyclohexyl.

The term "alkenyl", as used herein, unless otherwise indicated, means straight-chain, cyclic, or branched-chain hydrocarbon radicals containing at least one carbon-carbon double bond. Examples of alkenyl radicals include ethenyl, E- and Z-propenyl, isopropenyl, E- and Z-butenyl, E- and Z-isobutenyl, E- and Z-pentenyl, E- and Z-hexenyl, E,E-, E,Z-, Z,E-, Z,Z-hexadienyl, and the like. An optionally substituted alkenyl refers to an alkenyl having optionally one or more substituents (for example 1, 2, 3 or 4), selected from those defined above for substituted alkyl.

The term "aryl" as used herein refers to a polyunsaturated, aromatic hydrocarbyl group having a single ring (i.e. phenyl) or multiple aromatic rings fused together (e.g. naphthalene or anthracene) or linked covalently, typically containing 6 to 10 atoms; wherein at least one ring is aromatic. The aromatic ring may optionally include one to three additional rings (either cycloalkyl, heterocyclyl, or heteroaryl) fused thereto. Aryl is also intended to include the partially hydrogenated derivatives of the carbocyclic systems enumerated herein. Non-limiting examples of aryl comprise phenyl, biphenylyl, biphenylenyl, 5- or 6-tetralinyl, 1-, 2-, 3-, 4-, 5-, 6-, 7-, or 8-azulenyl, 1- or 2-naphthyl, 1-, 2-, or 3-indenyl, 1-, 2-, or 9-anthryl, 1- 2-, 3-, 4-, or 5-acenaphtylenyl, 3-, 4-, or 5-acenaphtenyl, 1-, 2-, 3-, 4-, or 10-phenanthryl, 1- or 2-pentalenyl, 1, 2-, 3-, or 4-fluorenyl, 4- or 5-indanyl, 5-, 6-, 7-, or 8-tetrahydronaphthyl, 1,2,3,4-tetrahydronaphthyl, 1,4-dihydronaphthyl, dibenzo[a,d]cylcoheptenyl, and 1-, 2-, 3-, 4-, or 5-pyrenyl.

The aryl ring can optionally be substituted by one or more substituents. An "optionally substituted aryl" refers to an aryl having optionally one or more substituents (for example 1 to 5 substituents, for example 1, 2, 3 or 4) at any available point of attachment. Non-limiting examples of such substituents are selected from halogen, hydroxyl, oxo, nitro, amino, hydrazine, aminocarbonyl, azido, cyano, alkyl, cycloalkyl, alkenyl, alkynyl, cycloalkylalkyl, alkylamino, alkoxy, -SO2-NH2, aryl, heteroaryl, aralkyl, haloalkyl, haloalkoxy, alkoxycarbonyl, alkylaminocarbonyl, heteroarylalkyl, alkylsulfonamide, heterocyclyl, alkylcarbonylaminoalkyl, aryloxy, alkylcarbonyl, acyl, arylcarbonyl, aminocarbonyl, alkylsulfoxide, -SO2Ra, alkylthio, carboxyl, and the like, wherein Ra is alkyl or cycloalkyl.

Within the context of the present invention all of said coniferyl alcohols of formula (VI) could serve as reagents in the acrylation of the alcohols present in said coniferyl alcohols, and the use thereof in the synthesis of homo-and copolymers.

It is accordingly an object of the present invention to provide homo-and copolymers of the di-(meth)acrylates of the coniferyl alcohols found in lignin oil and represented by formula (VI) above, in particular di-(meth)acrylates of DCA and of the following alcohols as we expect them to be present in the lignin oil as well: p-Coumaryl alcohol Coniferyl alcohol Sinapyl alcohol 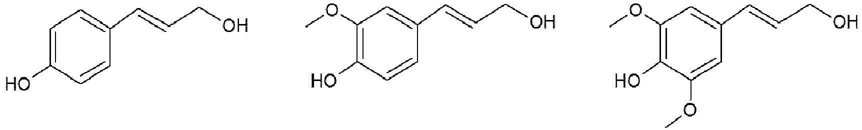 dihydroconiferyl alcohol (DCA)

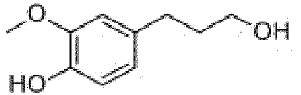

Several different monomers can be obtained from wood deconstruction using different techniques and the aforementioned monolignols, including dihydroconiferyl alcohol are one of them. As mentioned above, all of the coniferyl alcohols obtainable from lignin depolymerization can be acrylated and serve as building blocks in the subsequent polymerisation reaction.

Acrylate polymers are currently produced at large scale for a number of applications. The most common large scale methods to prepare acrylic monomers include reaction with acrylic anhydrides or chlorides

### Synthesis of di-acrylated monolignols

As such, the present invention provides a method for the acrylation of the alcohols of the monolignols obtainable from lignin depolymerization, said method comprising contacting said monolignols according to formula (I) in an anhydrous environment with an excess of an acrylate according to formula (VII) in the presence of a catalyst;

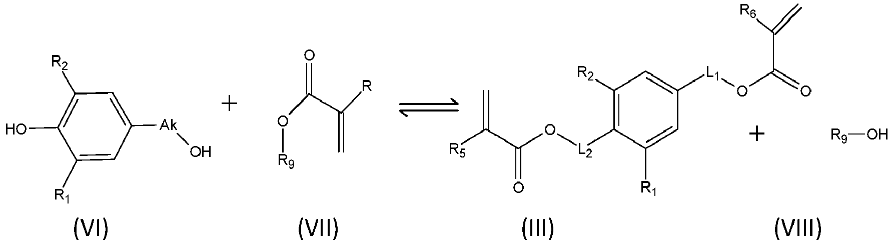

Wherein;
- R₁ and R₂ each independently represent hydrogen, or oxo-C₁₋₄alkyl; in particular hydrogen or oxo-methyl;
- Ak represents a C₁₋₆ carbon chain, including a C₁₋₆alkyl or C₁₋₆alkenyl;in particular a C₁₋₆alkyl;
- Rg represents a C₁₋₆ carbon chain, including a C₁₋₆alkyl or C₁₋₆alkenyl;in particular a C₁₋₆alkyl; and
- R represents R₅ or R₆ as defined herein before.

Yielding the di-acrylated monolignols of formula (III).

In the foregoing reaction the reaction mixture is typically kept under an inert atmosphere and at a temperature between 30 and 80°C for a time sufficient to ensure near complete conversion of the alcohols. For example in case of DCA with methyl(meth)acrylate the reaction mixture is kept at 60°C, with a residence time of 48-65h to ensure complete conversion for all alcohols.

Since poly(meth)acrylates are produced by means of free radical polymerization, and can even be polymerized at moderate temperatures even without the need of adding a radical initiator, an uncontrolled polymerization reaction could start as the concentration of the di-(meth)acrylated monolignols of formula (III) increases in the reaction mixture. Hence, in this transesterification reaction polymerization inhibitors are always preferably added to the reaction mixture. Within the context of the present invention the art known polymerization inhibitors can be used in a concentration range of 100 to 1000 ppm of the reaction mixture, in particular of about 500 ppm. Polymerization inhibitors such as 4-methoxyphenol (100-1000 ppm), hydroquinone (100-1000 ppm), 2,4-Dimethyl-6-tertbutylphenol (100-1000 ppm), phenothiazine (100-1000 ppm) and the like.

Thus in one embodiment the present invention provides a method for the acrylation of the alcohols of the monolignols obtainable from lignin depolymerization, said method comprising contacting the monolignols according to formula (VI) with an acrylate according to formula (VII) in the presence of a polymerization inhibitor. In a particular embodiment these polymerization inhibitors are selected from 4-tert-Butylpyrocatechol; tert-Butylhydroquinone; 1,4-benzoquinone; 6-tert-Butyl-2,4-xylenol; 2-tert-Butyl-1,4-benzoquinone; 2,6-Di-tert-butyl-p-cresol; 2,6-di-tert-butylphenol; 1,1-diphenyl-2-picrylhydrazyl Free Radical; hydroquinone; 4-methoxyphenol; pPhenothiazine; more in particular 4-methoxyphenol (500 ppm) and phenothiazine (500 ppm).

The di-(meth)acrylated monolignols of formula (III) obtained using the acrylation method of the present invention can simply be purified from the reaction mixture by precipitating in water, filtering/decanting insolubles and distilling off the excess of acrylate (VII) used in the synthesis of the di-(meth)acrylated monolignols of formula (III). As already mentioned herein before, these di-(meth)acrylated monolignols of formula (III) could be used as monomers in radical polymerization reaction using AIBN (or potentially other initiators) in dioxane (or potentially other solvents) without any further purification.

### Polymers

Thus in a second object the present invention provides polydihydroconiferyl alcohol methacrylates, comprising the di-(meth)acrylated monolignols of formula (III) as repeating units and represented by formula (I)

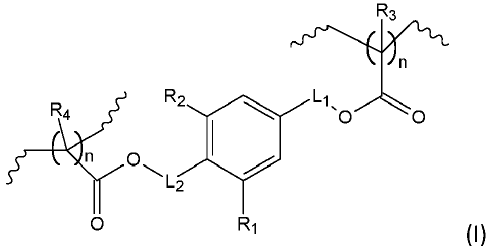

Wherein;
- R₁ and R₂ each independently represent hydrogen or oxy-C₁₋₄alkyl; in particular hydrogen or oxy-methyl;
- L₁ and L₂ each independently represents a direct bond, C₁₋₆ carbon chain, including a C₁₋₆alkyl or C₁₋₆alkenyl;
- R₃ and R₄ each independently represents Hydrogen or C₁₋₆alkyl; and
- n represent an integer ≥ 2

Mixtures of monomers can be utilized in the polymerization process, some of the substituents (R₁, R₂, R₃, R₄, L₁, and L₂) might be different in the repeating units. Therefore, the term independently in the formula, indicates that within the repeating units in the polymer the substituents (R₁, R₂, R₃, R₄, L₁, and L₂) can be elected independently of one another. Mixtures of different di-(meth)acrylated monolignols of formula (III) can be used, and therefore the term independently for R₁, R₂, R₃, R₄, L₁, and L₂, includes any of the possible hydrogen and -oxo- C₁₋₄alkys in case of R1 and R2; any of the possible hydrogen or C₁₋₆alkyl chains in case of R₃ and R₄; and any of the possible direct bond, or C₁₋₆ carbon chain in case of L₁ and L₂. In the following embodiments, a more detailed description of the polymers and the way of synthesizing them will be provided.

The homopolymers are the result of a radical polymerization reaction of the di-(meth)acrylated monolignols of formula (III) using a radical initiator in an appropriate solvent. Solvents used in a radical polymerization reaction are known to the skilled person and required are chosen for example from dioxane, THF, methanol, ethanol, DMF and others. In a preferred embodiment the radical polymerization reaction is performed by dissolving the -(meth)acrylated monolignols of formula (III) in dioxane and initiating the reaction by adding a radical initiator.

As used herein, radical initiators are substances that can produce radical species under mild conditions and promote radical reactions. These substances generally possess weak bonds-bonds that have small bond dissociation energies. Typical examples are generally known to the person skilled in the art and include halogen molecules, azo compounds, and organic and inorganic peroxides. Within the context of the present invention azo compounds are preferably being used as radical initiators since they provide two carbon-centered radicals and nitrogen gas which is easily separated from the reaction mixture. In a particular embodiment the radical initiators used in the radical polymerization reaction according to the invention are azo compounds selected from azobisisobutyronitrile (AIBN) or 1,1'-azobis(cyclohexanecarbonitrile) (ABCN). It has been reported in a literature before that lignin compounds can slow down or inhibit radical polymerization and this effect is more pronounced in the case of oxygen centered rather than carbon centered radical initiators where polymerization using peroxide intitiators can be stopped completely even by additions of small ammounts of eugenol. (S. Fujisawa, I. Kadoma, Biomaterials 1997, 18, 9, 701-703).

Besides homopolymers, the present invention also provides copolymers comprising the di-(meth)acrylated monolignols of formula (III) together with other acrylic monomers such as for example mono-(meth)acrylated monolignols, methyl methacrylates, such as MMA, methyl acrylates, ethyl acrylates, ethyl methacrylate, 2-ethylhexyl acrylate, acrylates from other Guerbet alcohols, methacrylates from Guerbet alcohols, , butyl acrylate, butyl methacrylate, propyl acrylate, propyl methacrylate, 3-phenyl-propylmethacrylate, citronellyl acrylate, geranyl acrylate, neryl acrylate, prenyl acrylate, citronellyl methacrylate, geranyl methacrylate, neryl methacrylate, prenyl methacrylate, Poly(ethylene glycol) diacrylates, such as PEGDA 250, PEGDA 400, PEGDA 575, PEGDA 700 and the like, other acrylates and methacrylates of terpene alcohols and the like.

In such, instance the DA polymers are characterized in comprising further repeating units obtained from such other (meth)acrylic monomers and generally represented by formula (IV) below.

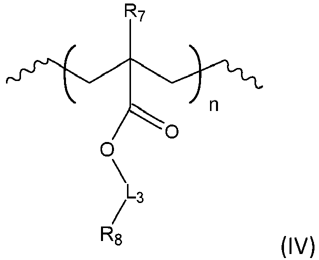

Wherein,
- L₁ represents a direct bond, C₁₋₆ carbon chain, including a C₁₋₆alkyl or C₁₋₆alkenyl;
- R₇ represents hydrogen or C₁₋₆alkyl;
- R₈ represents C₁₋₂₄alkyl; C₂₋₂₄alkenyl; or aryl wherein said aryl is optionally substituted with one or more substituents selected from the group consisting of -OH, and -oxy-C₁₋₆alkyl.

In a particular embodiment the di-(meth)acrylated monolignols of formula (III) are combined with the mono-(meth)acryl monolignols disclosed in PCT patent publication WO2021121889. In particular yielding repeating units by formula (IV) wherein; 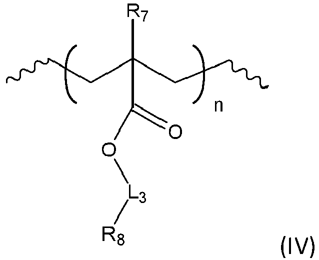
- L₃ represents a direct bond, C₁₋₆ carbon chain, including a C₁₋₆alkyl or C₁₋₆alkenyl;
- R₇ represents hydrogen or C₁₋₆alkyl;
- R₈ represents aryl substituted with one or more substituents selected from the group consisting of -OH, and -oxy-C₁₋₆alkyl; in particular substituted one or more substituents selected from the group consisting of -OH, and methoxy-.

Within the context of the present invention, the repeating units of the copolymers in Formula IV are not necessarily the same based on different (R₇, R₈, and L₃) substituents in the repeating unit. In a preferred embodiment the repeating units of the copolymers in Formula IV are the same.

The copolymers of formula VIII are synthesized using the same radical polymerization reaction as for the homopolymers of formula VII, only using a mixture of the mono-acrylated lignin-based monomers of formula (III) with other acrylic monomers instead. This and other embodiments of the invention will become apparent from the specific examples provided herein below.

### Examples of the invention

### Synthesis of di-acrylated monolignols

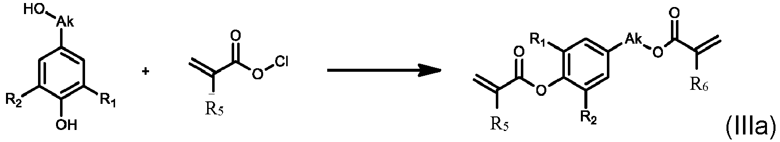

### Synthesis of di-acrylated monolignols of formula (IIIA) wherein R1, R2, R5, and R6 are as defined herein before, and wherein Ak represents a direct bond, C₁₋₆ carbon chain, including a C₁₋₆alkyl or C₁₋₆alkenyl; in particular a C₁₋₆ carbon chain, including a C₁₋₆alkyl or C₁₋₆alkenyl

Glassware was dried in the oven at 100°C for at least one night. Before use, the glassware was cooled under a nitrogen flow. DCA (5.00 g, 1 eq, 54.88 mmol OH) was dissolved together with triethylamine (TEA, 8.39 mL, 1.2 eq) in anhydrous dimethylformamide (DMF, 35 mL) under a nitrogen atmosphere. The solution was flushed with a nitrogen flow for an additional 10 minutes. Acryloyl chloride (4.9 mL, 1.1 eq) was diluted in dry DMF (25 mL) and flushed with nitrogen for 15 minutes. The diluted acryloyl chloride was added dropwise to the reaction flask, while stirring in an ice bath. The mixture stirred overnight and was allowed to reach room temperature. The crude mixture was precipitated in distilled water (700 mL). The suspension was filtered using a Büchner filter. The residue was placed in an aluminum container and was dried overnight in a vacuum oven at 40°C. Then, the product was grinded and left for another night under vacuum at 40°C. A yellowish oil was obtained (6.58 g), which was stored in amber colored container at 4°C

### Synthesis of acrylic resins

Acrylic resins were prepared by a conventional radical polymerization on an acrylated lignin oil comprising diacrylated DCA in an amount of 30 wt% or 20 wt% with MMA and PEG diacrylate as further acrylic monomers. Said composition being dissolved in an appropriate solvent and initiating the reaction by adding 1 wt% azobisisobutyronitrile (AIBN).

| **No** | **MMA** | **Acrylated Lignin Oil (wt%)** | **PEG diacrylate** | **Soluble fraction** |
|---|---|---|---|---|
| | **(wt%)** | **Bloom Lignin (wt%)** - **DCA DA (wt%)** | **(wt%)** | **(%)** |
| 1 | 30 | 30 80-20 | 40 | 18 |
| 2 | 30 | 10 80-20 | 40 | 9 |

## Claims

1. Polyacrylates, comprising repeating units obtained from diacrylated monolignols and represented by formula (I) 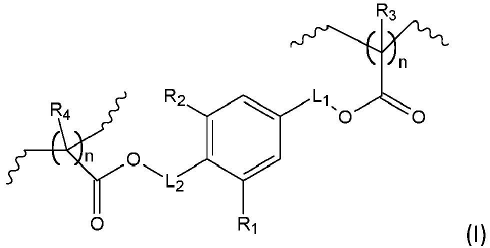 Wherein;
• R₁ and R₂ each independently represent hydrogen or oxy-C₁₋₄alkyl; in particular hydrogen or oxy-methyl;
• L₁ and L₂ each independently represents a direct bond, C₁₋₆ carbon chain, including a C₁₋₆alkyl or C₁₋₆alkenyl;
• R₃ and R₄ each independently represents Hydrogen or C₁₋₆alkyl; and
• n is an integer ≥ 2

2. Polyacrylates comprising cross-linkable moieties obtained from di-acrylated monolignols and generally represented by formula (II) below. 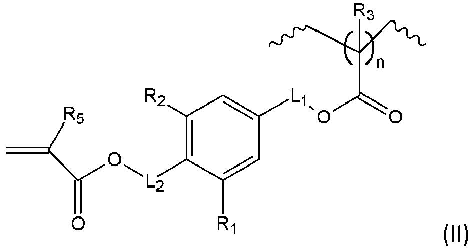 Wherein;
• R₁ and R₂ each independently represent hydrogen or oxy-C₁₋₄alkyl; in particular hydrogen or oxy-methyl;
• L₁ and L₂ each independently represents a direct bond, C₁₋₆ carbon chain, including a C₁₋₆alkyl or C₁₋₆alkenyl;
• R₃ represents hydrogen or C₁₋₆alkyl;
• R₅ represents hydrogen or C₁₋₆ alkyl; in particular hydrogen, or methyl; and
• n represent an integer ≥ 2

3. The polyacrylates according to claims 1 or 2, wherein within the repeating units in the polymer the substituents (R₁, R₂, R₃, L₁, L₂, R₄ and R₅) can be elected independently of one another.

4. The polyacrylates according to claims 1 or 2, wherein the repeating units in the polymer are the same.

5. The polyacrylates according to any one of claims 1 to 4, further comprising repeating units obtained from other acrylic monomers, and represented by formula IV 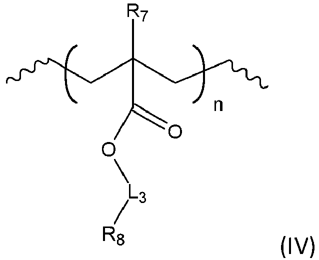 Wherein,
• L₃ represents a direct bond, C₁₋₆ carbon chain, including a C₁₋₆alkyl or C₁₋₆alkenyl;
• R₇ represents hydrogen or C₁₋₆alkyl;
• R₈ represents C₁₋₂₄alkyl; C₂₋₂₄alkenyl; or aryl wherein said aryl is optionally substituted with one or more substituents selected from the group consisting of -OH, and -oxy-C₁₋₆alkyl.

6. Polymerizable monomers for use in the synthesis of polyacrylate polymers according to formulas (I) and (II) above, said polymerizable monomers consisting of di-acrylated monolignols commonly found in depolymerized lignins, and selected from the group consisting of diacrylated propylguaiacol (PG), di-acrylated propylsyringol (PS), diacrylated dihydroconiferyl alcohol (DCA) and di-acrylated dihydrosinapyl alcohol (DSA).

7. The polymerizable monomers according to claim 6, wherein said diacrylated monolignols are generally represented by formula (III) below; 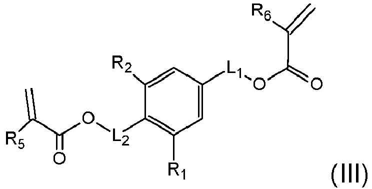 Wherein;
• R₁ and R₂ each independently represent hydrogen or oxy-C₁₋₄alkyl; in particular hydrogen or oxy-methyl;
• R₅ and R₆ each independently represent hydrogen or C₁₋₆ alkyl; in particular hydrogen or methyl; and
• L₁ and L₂ each independently represents a direct bond, C₁₋₆ carbon chain, including a C₁₋₆alkyl or C₁₋₆alkenyl.

8. The polymerizable monomers according to claim 7 wherein;
• R₁ and R₂ each independently represent hydrogen or oxy-C₁₋₄alkyl; in particular hydrogen or oxy-methyl;
• R₅ and R₆ each independently represent hydrogen or C₁₋₆ alkyl; in particular hydrogen or methyl;
• L₁ represents a direct bond, C₁₋₆ carbon chain, including a C₁₋₆alkyl or C₁₋₆alkenyl;in particular a C₁₋₆ carbon chain, including a C₁₋₆alkyl or C₁₋₆alkenyl; and
• L₁ represents a direct bond.

9. The polymerizable monomers according to any one of claims 6 to 8, selected from the group consisting of 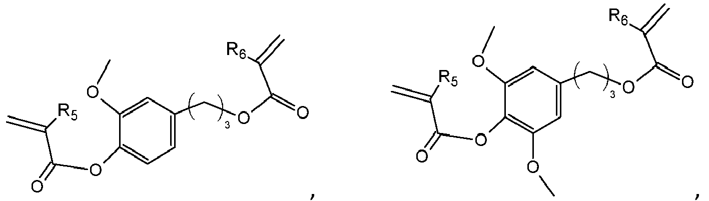 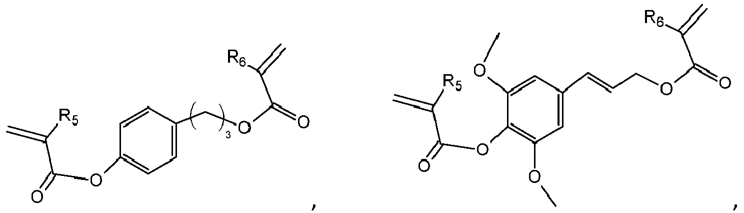 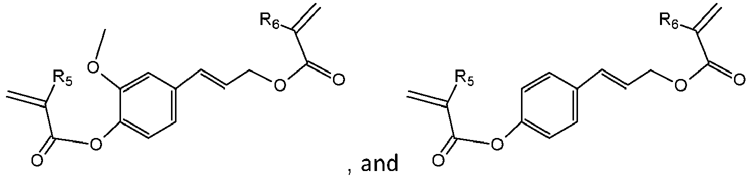 Wherein R₅ and R₆ each independently represent hydrogen or C₁₋₆ alkyl; in particular hydrogen or methyl.

10. Polyacrylates according to claim 5, wherein the other acrylic monomers are selected from the group consisting of methyl methacrylates, Methacrylates, Methyl acrylates, Ethyl acrylates, 2-Ethylhexyl acrylate, Hydroxyethyl methacrylate, Butyl acrylate, Butyl methacrylate, 3-phenyl-propylmethacrylate, and the like.

11. The polyacrylates according to claim 1, wherein L₂ represents a direct bond.

12. A method for the manufacture of the polyacrylates according to any one of claims 1 to 5, 10 or 11.

13. The method according to claim 12, comprising the polymerization reaction of a composition comprising diacrylated monolignol according to formula (III). 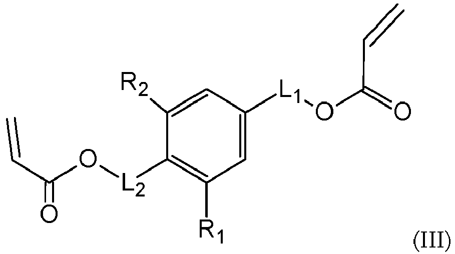 Wherein;
• R₁ and R₂ each independently represent hydrogen or oxy-C₁₋₄alkyl; in particular hydrogen or oxy-methyl; and
• L₁ and L₂ each independently represents a direct bond, C₁₋₆ carbon chain, including a C₁₋₆alkyl or C₁₋₆alkenyl.

14. The method according to claim 13, wherein the composition further comprises other acrylic monomers according to formula V; 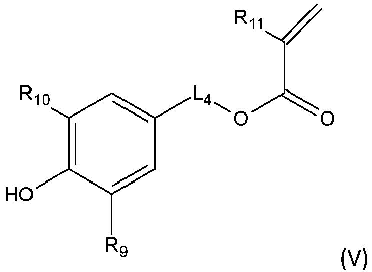 Wherein;
• R₉ and R₁₀ each independently represent hydrogen or oxy-C₁₋₄alkyl; in particular hydrogen or oxy-methyl;
• L₄ represents a direct bond, C₁₋₆ carbon chain, including a C₁₋₆alkyl or C₁₋₆alkenyl;and
• R₁₁ represents hydrogen or C₁₋₆alkyl;

15. The method according to claim 13, wherein L₂ represents a direct bond.
